(19) Europäisches Patentamt / European Patent Office / Office européen des brevets

(11) **EP 4 138 437 A1**

(12) **EUROPEAN PATENT APPLICATION**
published in accordance with Art. 153(4) EPC

(43) Date of publication:
**22.02.2023 Bulletin 2023/08**

(21) Application number: **20931252.9**

(22) Date of filing: **18.04.2020**

(51) International Patent Classification (IPC):
**H04W 24/02** (2009.01)  **H04L 5/00** (2006.01)

(52) Cooperative Patent Classification (CPC):
**H04L 5/00; H04W 24/02**

(86) International application number:
**PCT/CN2020/085481**

(87) International publication number:
**WO 2021/208111 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HU, Rongyi
Dongguan, Guangdong 523860 (CN)**

(74) Representative: **Taor, Simon Edward William et al
Venner Shipley LLP
200 Aldersgate
London EC1A 4HD (GB)**

(54) **METHOD AND DEVICE FOR COMMUNICATION**

(57) Provided is a communication method and apparatus. The method includes obtaining measurement configuration information transmitted by a network device. The measurement configuration information includes a measurement gap, gap sharing information, and at least one measurement object. The gap sharing information indicates a proportion of measurement gap occupied by the at least one measurement object in relation to the measurement gap. Based on the gap sharing information, a mobility measurement is performed on the at least one measurement object in the measurement gap. With the gap sharing information indicating a variety of different sharing proportions for the measurement gap occupied by the at least one measurement object, the measurement priorities of various requirements can be configured based on the sharing proportions to perform the mobility measurement on each measurement object, which effectively meets diverse requirements of various networks or operators for measurement priorities.

Obtaining measurement configuration information transmitted by a network device, wherein the measurement configuration information includes a measurement gap, gap sharing information, and at least one measurement object, and the gap sharing information indicates a proportion of measurement gap occupied by the at least one measurement object in relation to the measurement gap — S801

Performing a mobility measurement on the at least one measurement object in the measurement gap based on the gap sharing information — S802

FIG. 8

**Description**

**FIELD**

The present disclosure relates to communication technologies, and more particularly, to a communication method and a communication apparatus.

**BACKGROUND**

Mobility measurement is an important part of a wireless communication network. In order to implement mobility measurement, a network device may indicate a measurement gap (MG) to a terminal device.

At present, in order to realize the sharing of MG resources between New Radio (NR) intra-frequency measurement and inter-frequency measurement, the implementation of MG sharing is introduced. In the implementation of MG sharing, certain indication information may be used to indicate sharing proportions for the intra-frequency measurement and the inter-frequency measurement, so as to share the MG resources for the intra-frequency measurement and the inter-frequency measurement, and a measurement priority can be indicated by indicating a corresponding sharing proportion.

However, at present, the indication information for indicating the sharing proportion has only 2 bits, so it is difficult to meet the diverse requirements of various networks or operators for measurement priorities.

**SUMMARY**

Embodiments of the present application provide a communication method and apparatus, to avoid the problem that it is difficult to meet the diverse requirements of various networks or operators for measurement priorities.

In a first aspect, an embodiment of the present disclosure provides a communication method, which is applied in a terminal device. The communication method includes: obtaining measurement configuration information transmitted by a network device, the measurement configuration information includes a measurement gap, gap sharing information, and at least one measurement object, and the gap sharing information indicates a proportion of measurement gap occupied by the at least one measurement object in relation to the measurement gap. The method further includes performing a mobility measurement on the at least one measurement object in the measurement gap based on the gap sharing information.

In a second aspect, an embodiment of the present disclosure provides a communication method, which is applied in a network device. The communication method includes: transmitting measurement configuration information to a terminal device. The measurement configuration information includes a measurement gap, gap sharing information and at least one measurement object, and the gap sharing information indicates a proportion of measurement gap occupied by the at least one measurement object in relation to the measurement gap.

In a third aspect, an embodiment of the present disclosure provides a communication apparatus, which is applied in a terminal device. The communication apparatus includes an obtaining module and a processing module. The obtaining module is configured to obtain measurement configuration information transmitted by a network device. The measurement configuration information includes a measurement gap, gap sharing information and at least one measurement object, and the gap sharing information indicates a proportion of measurement gap occupied by the at least one measurement object in relation to the measurement gap. The processing module is configured to perform mobility measurement on the at least one measurement object in the measurement gap based on the gap sharing information.

In a fourth aspect, an embodiment of the present disclosure provides a communication apparatus, which is applied in a network device. The communication apparatus includes: a transmitting module configured to transmit measurement configuration information to a terminal device. The measurement configuration information includes a measurement gap, gap sharing information, and at least one measurement object, and the gap sharing information indicates a proportion of measurement gap occupied by the at least one measurement object in relation to the measurement gap.

In a fifth aspect, an embodiment of the present disclosure provides a terminal device. The terminal device includes: a transceiver, a processor, and a memory. The memory has computer-executable instructions stored thereon. The processor, when executing the computerimplemented instructions stored in the memory, causes the processor to perform the communication method as described in the first aspect above.

In a sixth aspect, an embodiment of the present disclosure provides a network device. The network device includes: a transceiver, a processor, and a memory. The memory has computer-executable instructions stored thereon. The processor, when executing the computer-executable instructions stored in the memory, causes the processor to perform the communication method as described in the second aspect above.

In a seventh aspect, an embodiment of the present disclosure provides a computer-readable storage medium.

Computer-executable instructions are stored in the computer-readable storage medium. The computer-executable instructions, when executed by a processor, implement the communication method as described in the first aspect above.

In an eighth aspect, embodiments of the present disclosure provide a computer-readable storage medium. Computer-executable instructions are stored in the computer-readable storage medium. The computer-executable instructions, when executed by a processor, implement the communication method as described in the second aspect above.

Embodiments of the present disclosure provide a communication method and a communication apparatus. The method includes: obtaining measurement configuration information transmitted by a network device. The measurement configuration information includes a measurement gap, gap sharing information, and at least one measurement object, and the gap sharing information indicates a proportion of measurement gap occupied by the at least one measurement object in relation to the measurement gap. A mobility measurement is performed on the at least one measurement object in the measurement gap based on the gap sharing information. With the gap sharing information indicating a variety of different sharing proportions for the measurement gap occupied by at least one measurement object, measurement priorities of various requirements can be configured according to the sharing proportions so that the mobility measurement can be performed on each measurement object, thereby effectively meeting diverse requirements of the network or operator for measurement priorities.

**BRIEF DESCRIPTION OF DRAWINGS**

FIG. 1 is a schematic diagram of a communication scenario according to an embodiment of the present disclosure.
FIG. 2 is a schematic diagram of a mobility measurement according to an embodiment of the present disclosure.
FIG. 3 is a first schematic diagram of a frequency point according to an embodiment of the present disclosure.
FIG. 4 is a second schematic diagram of a frequency point according to an embodiment of the present disclosure.
FIG. 5 is a schematic diagram of GAP configuration parameters according to an embodiment of the present disclosure.
FIG. 6 is a schematic diagram of measurement GAPs according to an embodiment of the present disclosure.
FIG. 7 is a schematic diagram of an SMTC according to an embodiment of the present disclosure.
FIG. 8 is a flowchart of a communication method according to an embodiment of the present disclosure.
FIG. 9 is a first schematic diagram of groups according to an embodiment of the present disclosure.
FIG. 10 is a second schematic diagram of groups according to the embodiment of the present disclosure.
FIG. 11 is a flowchart of a communication method according to another embodiment of the present disclosure.
FIG. 12 is a first schematic structural diagram of a communication apparatus according to an embodiment of the present disclosure.
FIG. 13 is a second schematic structural diagram of a communication apparatus according to an embodiment of the present disclosure.
FIG. 14 is a schematic structural diagram of a terminal device according to an embodiment of the present disclosure.
FIG. 15 is a schematic structural diagram of a network device according to an embodiment of the present disclosure.

**DESCRIPTION OF EMBODIMENTS**

In order to facilitate understanding, the concepts involved in the present disclosure will be explained first.

3GPP: the 3rd generation partnership project.

Terminal device: It can be a device that includes wireless transceiving functions and can cooperate with a network device to provide a user with communication services. Specifically, the terminal device can refer to user equipment (UE), access terminal, user unit, user station, mobile station, mobile device, remote station, remote terminal, mobile equipment, user terminal, terminal, wireless terminal equipment, user agent or user device. For example, the terminal device may be a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, an in-vehicle device, a wearable device, a terminal device in 5G or beyond networks.

Network device: The network device can be a device used to communicate with the terminal device. The network device can be a base transceiver station (BTS) in a global system for mobile communication (GSM) or a code division multiple access (CDMA) communication system, a NodeB (NB) in a wideband code division multiple access (WCDMA) system, or an evolutional node B (eNB or eNodeB) in the LTE system. Alternatively, the network device may be a relay station, an access point, an in-vehicle device, a wearable device, a network side device in the future 5G or beyond networks, or a network device in the future evolved public land mobile network (PLMN), and so on.

The network device involved in the embodiments of the present disclosure may also be referred to as a radio access network (RAN) device. The RAN device is connected to the terminal device, and is used for receiving data of the terminal device and transmitting it to the core network device. The RAN device corresponds to different devices in different communication systems. For example, in the second generation mobile communication (2G for short) system, the RAN device corresponds to the base station and the base station controller; in the third generation mobile communication (3G for short) system, the RAN device corresponds to the base station and the radio network controller (RNC); in the fourth generation mobile communication (4G for short) system, the RAN device corresponds to the Evolutional Node B (eNB); and in the 5G system, the RAN device corresponds to the 5G system, such as the access network device in NR (e.g., gNB, centralized unit (CU), distributed unit (DU)).

Mobility measurement: Mobility measurement is an important part of the wireless communication network. The terminal device can obtain the signal quality of its own cell and neighboring cells by performing the mobility measurement, and report the relevant measurement result to the network device. The network device can determine, based on the reported measurement result, whether the terminal device performs cell handover. The mobility measurement can better support the mobility of the terminal device, such as performing handover and cell reselection in a timely manner, which ensures the reliability and continuity of user services.

Frequency point: It refers to a specific absolute frequency value, which generally is a center frequency of a modulated signal. A frequency point is a number assigned to a fixed frequency.

Intra-frequency measurement: in this scenario, a frequency point of a target cell to be measured is the same as a frequency point of the current serving cell.

Inter-frequency measurement: in this scenario, the frequency point of the target cell to be measured is different from the frequency point of the current serving cell.

Inter-RAT measurement: in this scenario, a network standard of the target cell to be measured is different from a network standard of the current serving cell.

In addition, it should be understood that in the description of the present disclosure, terms such as "first" and "second" are only used for the purpose of distinguishing, and should not be understood as indicating or implying relative importance, as indicating or implying the order, or as indicating or implying the association relationship between similar names.

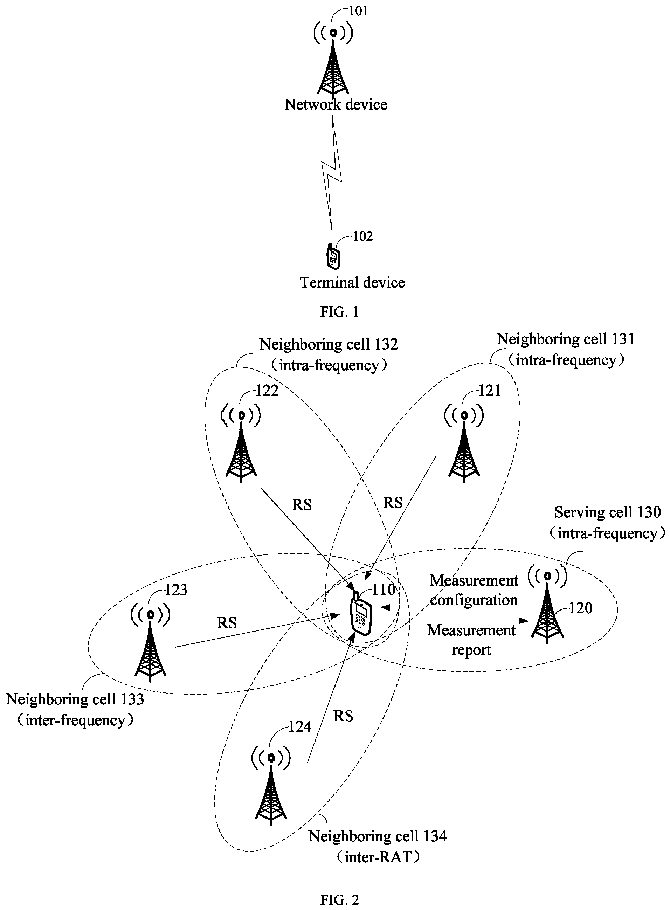

Hereinafter, with reference to FIG. 1, a scenario to which the communication method according to the present disclosure is applicable will be described.

FIG. 1 is a schematic diagram of a communication scenario according to an embodiment of the present disclosure. Referring to FIG. 1, a network device 101 and a terminal device 102 are included, and wireless communication can be performed between the network device 101 and the terminal device 102. The terminal device 102 can communicate with at least one core network via a radio access network (RAN).

The communication system may be global system of mobile communication (GSM for short), code division multiple access (CDMA for short) system, wideband code division multiple access (WCDMA for short) system, long term evolution (LTE for short) system or fifth generation mobile communication (5G for short) system.

Correspondingly, the base station may be a base transceiver station (BTS for short) in a GSM system or a CDMA system, a NodeB (NB for short) in a WCDMA system, or an evolved NodeB (eNB for short) in an LTE system, an access point (AP) or a relay station, or a base station in a 5G system, etc., which is not limited here.

The 5G mobile communication system described in the present disclosure includes a non-standalone (NSA) 5G mobile communication system and/or a standalone (SA) 5G mobile communication system. The technical solutions according to the present disclosure can also be applied in the future communication systems, such as the sixth generation mobile communication system. The communication system may also be a PLMN network, a deviceto-device (D2D) network, a machine-to-machine (M2M) network, an IoT network, or other networks.

It can be understood that, if the technical solutions of the embodiments of the present disclosure are applied in other wireless communication networks, certain names may also be replaced by the names of corresponding functions in other wireless communication networks.

The network architecture and service scenarios described in the embodiments of the present disclosure are for the purpose of illustrating the technical solutions of the embodiments of the present disclosure more clearly, and do not constitute a limitation on the technical solutions according to the embodiments of the present disclosure. With the evolution of the network architecture and the emergence of new business scenarios, those of ordinary skill in the art know that the technical solutions according to the embodiments of the present disclosure are also applicable to similar technical problems.

On the basis of the content introduced above, the mobility measurement is described below in detail with reference to FIG. 2, which is a schematic diagram of a mobility measurement according to an embodiment of the present disclosure.

As shown in FIG. 2, the current system includes a terminal device 110 and a plurality of network devices 120 to 124. It is assumed that the terminal device is currently connected to the network device 120 (for example, in a radio resource control (RRC) connection mode), and operates in a serving cell 130 provided by the network device 120. Also, the terminal device 110 may be located within coverage areas of a group of neighboring cells 131 to 134 provided by the network devices 121 to 124, respectively.

In various embodiments, network devices 120 to 124 may implement the same or different radio access technologies, such as NR air interface, evolved universal terrestrial radio access (E-UTRA) air interface, universal terrestrial radio access network (UTRAN) air interface, global system for mobile communication (GSM) enhanced data rate for GSM evolution (EDGE) radio access network (GERAN) air interface and so on.

Each of the network devices 120 to 124 can implement the functions of the next generation Node B (gNB), evolved Node B (eNodeB), Node B (NodeB), etc. specified by corresponding standards developed or maintained by the 3rd generation partnership project (3GPP).

Thus, in one embodiment, the terminal device 110 may be a device that communicates with the network devices 120 to 124 according to respective communication protocols corresponding to the wireless access technologies used by the respective network devices.

In a possible implementation, the terminal device 110 may receive a set of measurement configurations from the serving cell 130, and the terminal device 110 performs the measurement procedure to measure the serving cell 130 and the neighboring cells 121 to 124, and transmits the measurement report to the network device 120.

For example, the network device 120 may transmit the measurement configuration to the terminal device 110 via RRC signaling. For example, the measurement may be performed based on reference signals (RSs) transmitted by the network devices 121 to 124, or the measurement may also be performed based on the reference signal transmitted by the network device 120.

In a possible implementation, the reference signal may be a synchronization signal block (SSB), channel state information (CSI) reference signal, or the like.

In the embodiment, the measurement configuration 141 may specify a group of measurement objects (MO). In a possible implementation, the measurement objects may be in units of frequency points, and each configured measurement object is an individual frequency point, and has an individual measurement object identification. For example, for E-UTRA intra-frequency measurement and inter-frequency measurement, the measurement object can be an individual E-UTRA carrier frequency.

The measurement configuration 141 may also specify a set of measurement qualities to be measured corresponding to the MO. For example, the measurement qualities include reference signal received power (RSRP), reference signal received quality (RSRQ), signal-to-noise and interference ratio (SINR), reference signal time difference (RSTD), etc.

Taking the reference signal being SSB as an example, the intra-frequency measurement, the inter-frequency measurement and inter-RAT measurement are described below in combination with FIG. 2. In a possible implementation, according to the 3GPP NR standard, in the NR system, if a center frequency of an SSB of the serving cell indicated for measurement is the same as a center frequency of an SSB of the target cell, and subcarrier spacings of the two SSBs are also the same, then the measurement can be defined as an SSB-based intra-frequency measurement. For example, the measurement of the neighboring cell 131 can be determined as the intra-frequency measurement.

Conversely, if the center frequency of the SSB of the serving cell indicated for measurement and the center frequency of the SSB of the target cell are different from each other, the measurement can be defined as an SSB-based inter-frequency measurement. For example, the measurement of the neighboring cell 133 can be determined as the inter-frequency measurement.

Furthermore, referring to FIG. 2, when the neighboring cell 134 implements a different RAT from the RAT of the serving cell 130, the measurement performed on the neighboring cell 134 may be determined as an inter-RAT measurement.

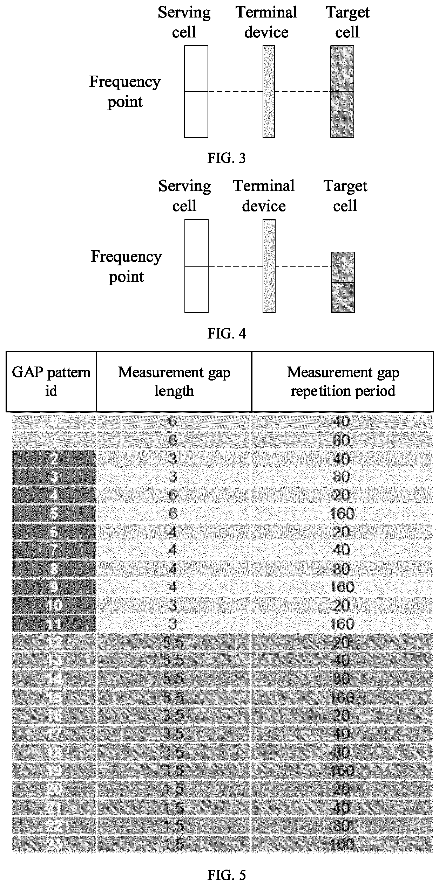

On the basis of the mobility measurement introduced in the above-mentioned embodiment of FIG. 2, the measurement gap (MG) in the mobility measurement are introduced below with reference to FIGS. 3 and 5. FIG. 3 is a first schematic diagram of a frequency point according to an embodiment of the present disclosure, FIG. 4 is a second schematic diagram of a frequency point according to an embodiment of the present disclosure, and FIG. 5 is a schematic diagram of GAP configuration parameters according to an embodiment of the present disclosure.

It can be understood by those skilled in the art that in general, a terminal device has only one receiver, so it is only possible to receive signals on one frequency point at the same time. In order to ensure that the terminal device can implement the mobility measurement, the terminal device can be configured with a measurement GAP. The measurement GAP is a time period during which the terminal device leaves the current frequency point to measure at another frequency point.

During the measurement GAP, the terminal device can tune its radio frequency (RF) circuit from the frequency point of the serving cell to the frequency of the target cell to perform cell search or measurement, and stop normal uplink and downlink data transmission on the serving cell in the corresponding frequency domain until the end of the measurement GAP.

Several possible implementations of the frequency point are introduced below with reference to FIG. 3 and FIG. 4.

Referring to FIG. 3, in a possible implementation, the serving cell where the terminal device is currently located has the same carrier frequency point and bandwidth as the target cell. This scenario belongs to the intra-frequency measurement, and no measurement GAP needs to be configured in this case.

Alternatively, the serving cell where the terminal device is currently located has the same carrier frequency point as the target cell, and the bandwidth of the target cell is smaller than the bandwidth of the current serving cell. This scenario also belongs to the intra-frequency measurement and no measurement GAP needs to be configured in this case.

Alternatively, the serving cell where the terminal device is currently located has the same carrier frequency point as the target cell, and the bandwidth of the target cell is greater than the bandwidth of the current serving cell. This scenario also belongs to the intra-frequency measurement and no measurement GAP needs to be configured in this case.

Alternatively, the serving cell where the terminal device is currently located has the same carrier frequency point as the target cell, but the terminal device is a narrowband device and cannot cover the bandwidth of the serving cell. In this case, the terminal device can operate on the bandwidth part (BWP) of the serving cell, and the BWP does not include the SSB indicated for measurement of the target cell. This scenario also belongs to the intra-frequency measurement, but the measurement GAP needs to be configured.

Referring to FIG. 4, in another possible implementation manner, the carrier frequency point of the serving cell where the terminal device is currently located is different from the carrier frequency point of the target cell, the bandwidth of the target cell is smaller than the bandwidth of the current serving cell, and the bandwidth of the target cell is within the cell bandwidth of the current serving cell. This scenario belongs to the inter-frequency measurement, and the measurement GAP needs to be configured.

Alternatively, the serving cell where the terminal device is currently located has a different carrier frequency point from that of the target cell, the bandwidth of the target cell is greater than the bandwidth of the current serving cell, and the bandwidth of the current serving cell is within the bandwidth of the target cell. This scenario belongs to the inter-frequency measurement and the measurement GAP needs to be configured.

Alternatively, the serving cell where the terminal device is currently located and the target cell have different carrier frequency points, and the bandwidth of the target cell does not overlap with the bandwidth of the current serving cell. This scenario belongs to the inter-frequency measurement, and measurement GAP needs to be configured.

Some possible scenarios where the measurement GAP is configured are described above.

Some specific configurations of the measurement GAP are described below.

In NR, the measurement GAP can be configured for the terminal device, that is, per-UE measurement gap; or, the measurement GAP can also be configured for the frequency range (FR), that is, per-FR measurement gap. The FR may include FR1 and FR2. The description of the configuration of per-UE/per-FR measurement GAP in the related protocol is attached below for reference.

Based on the above description, it can be determined that the measurement GAP can be configured for different granularities. Regardless the granularity of the configuration, the parameters for the measurement GAP can include GAP pattern identification (GAP pattern id), measurement gap length (MGL), measurement gap repetition period (MGRP), and measurement gap offset (gap offset).

The possible implementations of each parameter are described below in conjunction with FIG. 5.

Referring to FIG. 5, taking the measurement GAP in which the gap pattern identification is 1 as an example, MGL is 6 ms. As MGL represents the length of the measurement GAP, this means the terminal device needs to perform the intra-frequency measurement or the inter-frequency measurement within 6 ms, and data transmission cannot be performed on the current serving cell corresponding to the frequency point related to the measurement gap configuration.

The measurement GAP whose gap mode identification is 1 has an MGRP with a value of 40 ms. As MGRP represents the repetition period of the measurement gap, this means the measurement gap occurs every 40 ms.

The gapOffset identifies an offset position of the repetition period of the measurement gap.

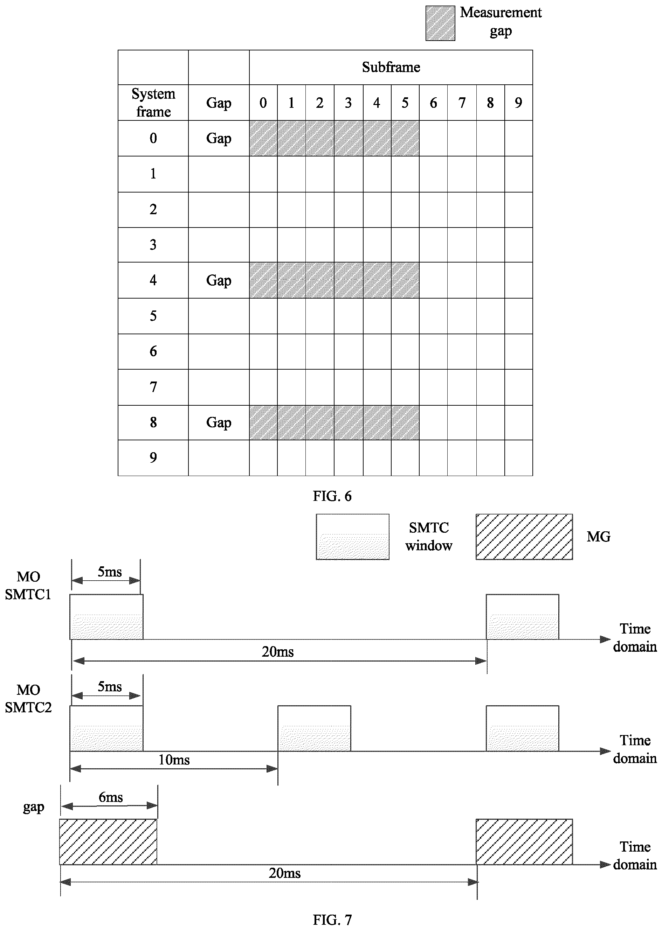

An implementation of the measurement GAP will be introduced below with reference to FIG. 6, which is a schematic diagram of a measurement GAP according to the embodiment of the present disclosure:

Referring to Figure 6, in a possible implementation, assuming that the MGL is 6 ms, then the measurement gap shown in FIG. 6 can be obtained for example. In order to facilitate drawing, the system frame number (SFN) is placed in the vertical axial direction, and the shaded part in FIG. 6 is where the measurement gap is located.

It should be noted here that the content introduced in FIG. 5 and FIG. 6 is for a single MG. In another possible implementation, the content provided in the present disclosure can also be applied to multiple MGs, whose implementation is similar to the implementation of the single MG.

In an embodiment, the measurement configuration may further include or indicate a set of synchronization signal block-based RRM measurement timing configurations (SMTC) for measurement. Each SMTC includes a set of parameters that define a series of measurement windows (referred to as SMTC occasions or SMTC window durations) for measuring the frequency point on which neighboring cell operates.

For example, the parameters of SMTC include the period of the measurement window sequence, the window duration and the offset. Based on SMTC, the terminal device can determine the timing of the measurement window sequence. By indicating SMTC, the measurement of the terminal device on each cell is restricted to a specific series of monitoring occasions.

In one example, the window duration of the SMTC takes a value from {5 ms, 10 ms, 20 ms, 40 ms, 80 ms, 160 ms}.

The relationship between the MG and the SMTC is introduced below with reference to FIG. 7, which is a schematic diagram of an SMTC according to an embodiment of the present disclosure.

As an example, FIG. 7 shows a schematic diagram of the configurations of an MG and two SMTCs of an MO. As shown in FIG. 7, the network device configures two SMTCs for the same MO, which are SMTC1 and SMTC2 respectively, having the same SMTC offset and length (such as 5 ms). It is assumed that the period of SMTC 1 is 20 ms and the period of SMTC2 is 10 ms.

The network device configures the MG with a period of 20 ms and with a length of 6 ms. As can be seen from FIG. 7, the measurement gap can cover all SMTC windows of SMTC1 for the MO and some of SMTC windows of SMTC2 for the MO.

In an embodiment, the to-be-measured SSB of the target cell is within the frequency range of the BWP of the serving cell, so measurement can be performed for the neighboring cell without the measurement GAP.

If the SMTC window configured for measuring target cell and the GAP specified by the measurement configuration completely overlap, in this configuration the measurement of the target cell is performed within the configured GAP and shares the configured GAP with the measurement of another target cell based on the same group of GAPs.

On the basis of the measurement GAP described above, the measurement GAP sharing is introduced below.

At present, in order to share measurement GAP resources between NR intra-frequency and inter-frequency measurements, measurement gap sharing (MG sharing) is introduced. Specifically, in Release 15/16, MG sharing is designed to coordinate MG resource allocation between NR intra-frequency MO and inter-frequency MO.

The two parties sharing MG resources in different networks are introduced below.

For E-UTRA and NR dual connectivity (EN-DC), the configured measurement GAP being per UE is taken as an example for description of gap sharing (measurement GAP sharing of per-FR1 or per FR2 is similar). The two parties sharing MG resources are as follows.

(1) MO of the NR intra-frequency measurement configured with GAP (or the MO of the intra-frequency measurement for which the SMTC completely overlaps with the per-UE measurement GAP).
(2) MO of the NR inter-frequency measurement, and/or MO of E-UTRA inter-frequency measurement configured with GAP, and/or MO of UTRA measurement, and/or MO of GSM measurement.

(1) and (2) described above share the measurement GAP resources indicated by the measurement configuration.

For stand-alone networking (Stand Alone, SA), the configured measurement GAP being per UE is taken as an example for description of the gap sharing (the measurement GAP sharing of per-FR1 or per FR2 is similar). The two parties sharing MG resources are as follows.

(1) MO of the NR intra-frequency measurement configured with GAP (or the MO of the intra-frequency measurement for which the SMTC completely overlaps with the per-UE measurement GAP).
(2) MO of the NR inter-frequency measurement, and/or MO of E-UTRA inter-frequency measurement configured with GAP.

That is to say, in the SA, 3G and 2G are not included.

On the basis of the above-mentioned content, if both sharing parties need to share the measurement GAP resources, it is also necessary to determine in what proportions the sharing is done between the two parties.

In a possible implementation, for GAP sharing between different types of measurements, the network device may configure 2-bit measurement gap sharing information (measGapSharingScheme) to indicate the respective sharing proportions for the sharing parties.

Similarly, the configuration of measGapSharingScheme can include the following three types: gap Sharing FR1, gap Sharing FR2 and gap Sharing UE.

In the implementation of the related art, the value of measGapSharingScheme can be as shown in Table 1 below.

Table 1

| measGapSharingScheme | Value of X (%) |
| --- | --- |
| 00 | Equally divided |
| 01 | 25 |

(continued)

| measGapSharingScheme | Value of X (%) |
|---|---|
| 10 | 50 |
| 11 | 75 |

Referring to Table 1 above, it can be determined that the 2-bit measGapSharingScheme can have 4 values. Each value corresponds to its own value of X. The value of X indicates the proportion of GAP resource occupied by the first party of the two parties sharing GAP resources.

For example, if the terminal device operates in SA mode, the two parties currently sharing GAP resources are the MO of the NR intra-frequency measurement and the MO of the NR inter-frequency measurement. Assuming that the network configures the value of measGapSharingScheme as 01, it means that the MO of the NR intra-frequency measurement can occupy 25% of the GAP resources, and the NR inter-frequency measurement can occupy 75% of the GAP resources.

For another example, when the network configures the value of measGapSharingScheme as 00, it means that the Gap resources needs to be equally divided between individual MOs of the intra-frequency measurement, the inter-frequency measurement and the E-UTRA measurement.

It needs to be explained here that it is only necessary to ensure that both parties of the sharing occupy the resources of the measurement GAP according to the occupancy proportions indicated by measGapSharingScheme. As for which resource is occupied, it depends on the specific implementation and is not limited.

The measurement time length that needs to be scaled can be determined by X introduced above. In a possible implementation, the measurement time length that needs to be scaled can be determined according to the following formula 1 and formula 2:

$$\text{Kintra} = \frac{1}{X} \times 100 \qquad \text{Formula 1,}$$

and

$$\text{Kinter} = \frac{1}{(100-1)} \times 100 \qquad \text{Formula 2,}$$

where Kintra is the measurement time length that needs to be scaled converted according to the corresponding intra-frequency type of measurement GAP, and Kinter is the measurement time length that needs to be scaled converted according to the corresponding inter-frequency type of measurement GAP.

In a possible example, for example, the current value of measGapSharingScheme is 01, which means that the value of X is 25. That is to say, the intra-frequency measurement occupies 25% of GAP resources. According to the above formula 1, it can be determined that Kintra is 4, which indicates that the measurement time length of the intra-frequency measurement is extended by 4 times. The value of X is 25, which indicates that the inter-frequency measurement occupies 75% of the GAP resources. According to the above formula 2, it can be determined that Kinter is 4/3, which indicates that the measurement time length of the intra-frequency is extended by 4/3 times.

Based on the measurement GAP sharing described above, it can be determined that the Gap sharing mechanism will have an impact on the measurement time. For the intra-frequency measurement or the inter-frequency measurement, it will be converted into Kinta and Kinter according to the sharing proportion, which is applied as the scaling of the intra-frequency measurement time or the inter-frequency measurement time.

Specifically, the MO statistics for SA and EN-DC will affect the measurement scaling (CSSF). The difference also lies in whether the MO statistics for non-intra-frequency measurement include for E-UTRA, UTRA, and GSM of inter-RAT. Gapsharing and $M_{inter,ij}$ in SA mode do not consider the inter-RAT measurement except E-UTRA. Their influence on the measurement scaling time is reflected as a carrier-level scaling factor, which is superimposed on the intra-frequency or inter-frequency measurement time. Based on the content introduced above, the implementation of measurement GAP sharing in the related art is introduced.

At present, in SA deployment network of Rel-15/16, the MG sharing mechanism is designed to coordinate MG resource allocation between MO of the intra-frequency measurement and MO the inter-frequency measurement. However, because of different network deployments and owned frequencies of different network operators, different spectrum plans for 2G, 3G, 4G and 5G of different standards, and different bearer networks for special services such as voice, some operators proposed to further improve the existing MG sharing mechanism, to give priority to the measurement of certain standard networks, such as the measurement of the LTE network in EN-DC mode, or for Voice, such as the measurement of 2G network or 3G network in circuit switched fallback (CSFB) voice.

However, in the existing Release 15/16, the bit length of the signaling indicating the sharing proportion is quite limited, with only 2 bits indicating the MG sharing proportion, so it is difficult to satisfy the diverse demand of all networks or operators for measurement priorities.

For example, when the terminal device operates under EN-DC, the 2G/3G voice fallback service of some 4G LTE networks is still very important. Particularly, for network deployment scenarios that do not support VoLTE, the 2G/3G voice fallback service is crucial.

However, if the bit length of the signaling indicating the sharing proportion is only 2 bits, it means that only 4 allocation proportions can be indicated, so it cannot meet the diverse needs of all networks or operators for measurement priorities.

In view of the problems in the related art, the present disclosure proposes the following technical concept: by enhancing the MG sharing mechanism and signaling, the network operator is provided with higher flexibility to give priority to the measurement of any desired RAT and to satisfy flexible mobile services need.

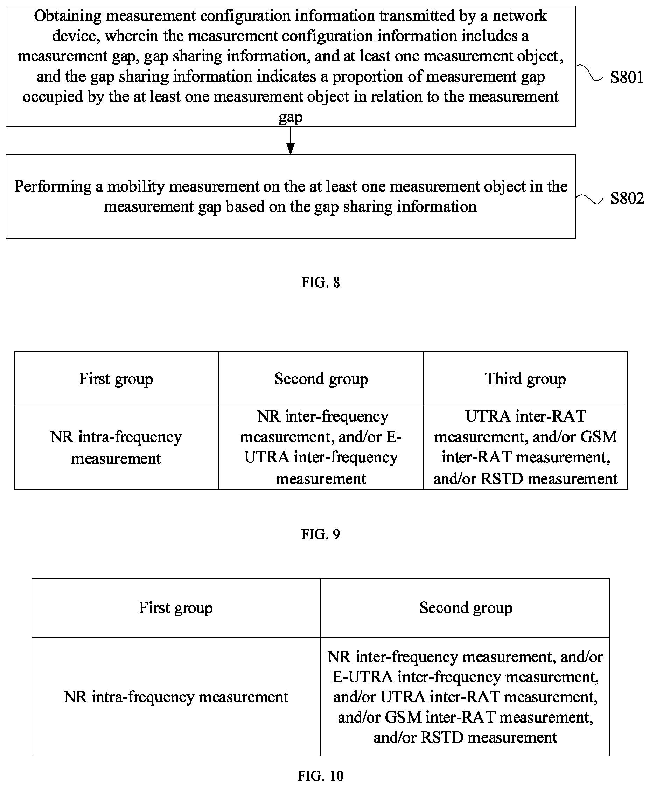

Based on the technical concept, the communication method according to the embodiment of the present disclosure is described below in detail with reference to FIG. 8, which is a flowchart of a communication method according to an embodiment of the present disclosure.

As shown in FIG. 8, the method includes the following actions.

At block S801, measurement configuration information transmitted by a network device is obtained. The measurement configuration information includes a measurement gap, gap sharing information, and at least one measurement object. The gap sharing information indicates a proportion of measurement gap occupied by the at least one measurement object in relation to the measurement gap.

In this embodiment, the terminal device can obtain the measurement configuration information. In a possible implementation, for example, the measurement configuration information transmitted by the network device in the current serving cell may be obtained, so as to perform the mobility measurement on each neighboring cell.

The measurement configuration information may include the measurement gap. In a possible implementation, the measurement gap may include, for example, the MGL, MGRP, gap offset and other information introduced in the foregoing embodiment. Repetition will not be made here for the specific configuration method of the measurement gap.

The measurement configuration information may further include at least one measurement object (MO). The specific implementation of the MO has also been introduced in the above embodiments, and will not be repeated here.

The configuration information in this embodiment may also include gap sharing information. In a possible implementation, the gap sharing information may be, for example, the measGapSharingScheme introduced in the foregoing embodiment. In this embodiment, the gap sharing information may indicate the proportion of the measurement gap occupied by each measurement object.

In this embodiment, the gap sharing information indicates the proportion of measurement gap occupied by the at least one measurement object in relation to the measurement gap. In a possible implementation, the gap sharing information is at least two bits. In a possible implementation, when the gap sharing information is 2 bits, it can indicate 4 different proportions; when the gap sharing information is 3 bits, it can indicate 8 different proportions, and so on. Therefore, in this embodiment, by increasing the bits of the gap sharing information, it can effectively improve the configurability of the sharing proportion.

At block S802, a mobility measurement is performed on the at least one measurement object in the measurement gap based on the gap sharing information.

Referring to the introduction of the above embodiments, it can be determined that each measurement object corresponds to its own type. For example, there may be measurement objects of the inter-frequency, and there may also be measurement objects of the intra-frequency. In a possible implementation, the type of the measurement object can be any of: the NR intra-frequency measurement, the NR inter-frequency measurement, the E-UTRA inter-frequency measurement, the UTRA inter-RAT measurement, the GSM inter-RAT measurement, or the reference signal time difference (RSTD) measurement.

In this embodiment, the types of measurement objects mentioned above may be grouped, so as to determine that the measurement GAP resources are shared by the measurement objects corresponding to the types included in each group.

In a possible implementation, a group corresponding to one of the at least one measurement object may be determined based on a measurement type to which the one of the at least one measurement object belongs. The gap sharing information indicates the proportion of the measurement gap occupied by measurements included in each group.

In the following description by way of example, assuming that the types of measurement objects are currently divided into two groups, the first group includes the NR intra-frequency measurement, and the second group includes the NR inter-frequency measurement, the E-UTRA inter-frequency measurement, the UTRA inter-RAT measurement, the GSM inter-RAT measurement, and the RSTD measurement.

Also, it is assumed that the measurement configuration information indicates three measurement objects, namely, measurement object X, measurement object Y, and measurement object Z. It is assumed that the type of measurement object X is the NR intra-frequency measurement, the type of measurement object Y is the NR inter-frequency measurement, and the type of measurement object Z is the GSM inter-RAT measurement.

Further, it is assumed that the proportions indicated by the current gap sharing information are that the first group occupies 25% and the second group occupies 75%. Thus, it can be determined, according to the gap sharing information and the group corresponding to the type of each measurement object, that measurement object X occupies 25% of the measurement GAP resources, and measurement object Y and measurement object Z occupy 75% of the measurement GAP resources.

Then, the mobility measurement can be performed on the measurement objects in the measurement GAP according to the proportion of the measurement GAP resource occupied by each measurement object respectively.

The specific implementation of the mobility measurement has been introduced in the above-mentioned embodiments, and will not be repeated here.

It can be understood that the gap sharing information in this embodiment is at least two bits, so it can indicate a variety of different sharing proportions, so as to configure the measurement priorities of various requirements according to different sharing proportions, which effectively meets the diverse requirements of various networks or operators for measurement priorities.

The communication method according to the embodiment of the present disclosure includes obtaining the measurement configuration information transmitted by the network device. The measurement configuration information includes the measurement gap, the gap sharing information, and the at least one measurement object, and the gap sharing information indicates the proportion of measurement gap occupied by the at least one measurement object in relation to the measurement gap. Based on the gap sharing information, the mobility measurement is performed on the at least one measurement object in the measurement gap. With the gap sharing information indicating a variety of different sharing proportions for the measurement gap occupied by at least one measurement object, the measurement priorities of various requirements can be configured according to the sharing proportions so that the mobility measurement can be performed on each measurement object, thereby effectively meeting diverse requirements of the network or operator for measurement priorities.

On the basis of the above embodiments, the groups of the types of the measurement objects and the implementation of the gap sharing information indicating the sharing proportion are described below in the present disclosure with reference to specific embodiments.

In this embodiment, the types of the measurement objects may be divided into M groups, where M is an integer greater than or equal to 2. That is to say, the types of the measurement objects are divided into at least 2 groups.

In a possible implementation, take M=3 as an example for illustration. That is to say, the types of the measurement objects can be divided into 3 groups, namely, a first group, a second group and a third group. The types of the measurement objects included in each group may be as shown in FIG. 9, which is a first schematic diagram of groups according to an embodiment of the present disclosure.

Referring to FIG. 9, the first group includes the NR intra-frequency measurement, the second group at least includes one of: the NR inter-frequency measurement, or the E-UTRA inter-frequency measurement, and the third group at least includes one of: the UTRA inter-RAT measurement, the GSM inter-RAT measurement, or the RSTD measurement.

When there are three groups, the gap sharing information may indicate the sharing proportion corresponding to each group.

In a possible implementation, the gap sharing information has N bits indicating a first proportion of the measurement GAP resource occupied by the at least one measurement object, and the first proportion has $2^N$ options.

For example, N=2, which means that the gap sharing information has 2 bits, and there are 4 ways to implement the first proportion, as shown for example in the following table 2.

Table 2

| Gap sharing information | Value of X (%) | Value of Y (%) | Value of Z (%) |
|---|---|---|---|
| 00 | Equally divided | | |
| 01 | 25 | 50 | 25 |
| 10 | 50 | 25 | 25 |
| 11 | 75 | 25 | 0 |

Referring to Table 2, X represents the sharing proportion of the first group, Y represents the sharing proportion of the second group, and Z represents the sharing proportion of the third group.

When the gap sharing information is 00, the measurement objects of the first group, the second group and the third group equally divide the measurement GAP resources; when the gap sharing information is 01, the measurement objects of the first group occupy 25% of the measurement GAP resources, the measurement objects of the second group occupy 50% of the measurement GAP resources, and the measurement objects of the third group occupy 25% of the measurement GAP resources; etc.

It can be understood that the numerical values of the first proportion shown in the above Table 2 are only exemplary, and the specific values of X, Y, Z are not limited in this embodiment, but can be selected according to actual needs, as long as the sum of the three values is equal to a proportion that can represent the full level.

Referring to the above Table 2, it can be determined that the current gap sharing information has 2 bits, and then the first proportion has 4 options, namely "equally divided", "25%, 50%, 25%", "50%, 25%, 25%", and "75%, 20%, 0%".

When the gap sharing information has 3 bits, the first proportion has 8 options, and so on. The implementation method is similar to that described above, and will not be repeated here. The various values of the first proportion can also be selected according to actual needs.

In another possible implementation, the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap. The second proportion has $2^{N-1}$ options, and the predetermined group is one or more of the M groups.

For example, N=3, which means that the gap sharing information has 3 bits, and there are 4 ways to implement the second proportion, as shown for example in the following table 3.

Table 3

| Gap sharing information | Value of X (%) | Value of Y (%) | Value of Z (%) |
|---|---|---|---|
| 000 | Equally divided | | |
| 001 | 25 | | |
| 010 | 50 | | |
| 011 | 75 | | |

Referring to Table 3, X represents the sharing proportion of the first group, Y represents the sharing proportion of the second group, and Z represents the sharing proportion of the third group.

Assuming that the current predetermined group is the third group, and the first bit of the gap sharing information is 0, which indicates activating no sharing of the measurement gap for the measurement object in the predetermined group. That is to say, no measurement gap sharing is activated for the third group, and the measurement gap resources are shared only between the first group and the second group.

For example, the remaining bits of the gap sharing information other than the first bit indicate the second proportion of the measurement gap occupied respectively by the measurement objects of the first group and the measurement objects of the second group. The second proportion has 4 options.

Referring to Table 3, when the gap sharing information is 000, the measurement objects of the first group and the second group equally divide the measurement GAP resources; when the gap sharing information is 001, the measurement objects of the first group occupy 25% of the measurement GAP resources, the measurement objects of the second group occupy 75% of the measurement GAP resources; etc...

It can be understood that the numerical values of the second proportion shown in the above Table 3 are only exemplary, and the specific value of X is not limited in this embodiment, but can be selected according to actual needs.

Referring to the above Table 3, it can be determined that the current gap sharing information has 3 bits, and then the second proportion has 4 options, namely "equally divided", "25%, 75%", "50%, 50%", and "75%, 25%".

When the gap sharing information has 4 bits, the second proportion has 8 options, and so on. The implementation method is similar to that described above, and will not be repeated here. The various values of the second proportion can also be selected according to actual needs.

In yet another possible implementation, the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to measurement gap. The third proportion has $2^{N-1}$ options, and the predetermined group is one or more of the M groups.

For example, N=3, which means that the gap sharing information has 3 bits, and there are 4 ways to implement the third proportion, as shown for example in the following table 4.

Table 4

| Gap sharing information | Value of X (%) | Value of Y (%) | Value of Z (%) |
|---|---|---|---|
| 100 | Equally divided | | |
| 101 | 25 | 50 | 25 |
| 110 | 50 | 25 | 25 |
| 111 | 75 | 25 | 0 |

Referring to Table 4, X represents the sharing proportion of the first group, Y represents the sharing proportion of the second group, and Z represents the sharing proportion of the third group.

Assuming that the current predetermined group is the third group, and the first bit of the gap sharing information is 1, which indicates activating sharing of the measurement gap for the measurement object in the predetermined group. That is, the first group, the second group and the third group currently share the measurement GAP resources.

For example, the remaining bits of the gap sharing information other than the first bit indicate the third proportion of the measurement gap occupied respectively by the measurement objects of the first group, the measurement objects of the second group, and the measurement objects of the third group. The third proportion has 4 options.

Referring to Table 4, when the gap sharing information is 100, the measurement objects of the first group, the second group and the third group equally divide the measurement GAP resources; when the gap sharing information is 101, the measurement objects of the first group occupy 25% of the measurement GAP resources, the measurement objects of the second group occupy 50% of the measurement GAP resources, and the measurement objects of the third group occupy 25% of the measurement GAP resources; etc.

It can be understood that the numerical values of the third proportion shown in the above Table 4 is only an exemplary, and the specific value of X is not limited in this embodiment, but can be selected according to actual needs.

Referring to the above Table 4, it can be determined that the current gap sharing information has 3 bits, and then the third proportion has 4 options, namely "equally divided", "25%, 50%, 25%", "50%, 25%, 25%", and "75%, 20%, 0%".

When the gap sharing information has 4 bits, the third proportion has 8 options, and so on. The implementation method is similar to that described above, and will not be repeated here. The various values of the third proportion can also be selected according to actual needs.

The division of the first group, the second group, and the third group may also be implemented in other forms. For example, the first group includes the NR intra-frequency measurement, the second group at least includes the NR inter-frequency measurement, and the third group at least includes one of: the E-UTRA inter-frequency measurement, the UTRA inter-RAT measurement, the GSM inter-RAT measurement, or the RSTD measurement. The specific implementation method is similar to that described above, but the division of the first group, the second group and the third group is different.

In the actual implementation, the specific division of the first group, the second group and the third group can be selected according to actual needs, which is not limited in this embodiment.

In another possible implementation, the groups may further include, for example, a fourth group, etc. This embodiment does not limit the specific implementation of the groups, and any possible groups may be formed by division according to actual needs.

At present, there are only two shared groups in the related art. For example, the measurement objects included in the second group cannot implement individual sharing proportion designation to designate the corresponding priority. By extending the groups of the types of measurement objects that share the measurement GAP resources, the communication method according to the embodiment of the present disclosure can support the sharing between the measurements of any RAT, especially the measurement required for the 2G/3G voice fallback service of inter-RAT, thereby supporting the network to allocate any RAT measurement priority.

On the basis of the foregoing embodiment, the groups according to this embodiment of the present disclosure may also include only two groups.

In another possible implementation, take M=2 as an example for illustration. That is to say, the types of measurement objects can be divided into two groups, which include a first group and a second group. The type of the measurement object included in each group may be as shown in FIG. 10, which is a second schematic diagram of groups according to an embodiment of the present disclosure.

Referring to FIG. 10, the first group includes the NR intra-frequency measurement, and the second group at least includes one of: the NR inter-frequency measurement, the E-UTRA inter-frequency measurement, the UTRA inter-RAT measurement, the GSM inter-RAT measurement, or the RSTD measurement.

That is to say, all the inter-RAT measurements are included in the second group. In the case where there are two groups, the gap sharing information may indicate the sharing proportion corresponding to each group.

In a possible implementation, the gap sharing information has N bits indicating a fourth proportion of the measurement gap occupied by the measurement objects of each group. The fourth proportion has $2^N$ options.

For example, N=2, which means that the gap sharing information has 2 bits, and there are 4 ways to implement the fourth proportion, as shown for example in the following table 5.

Table 5

| Gap sharing information | Value of X (%) |
| --- | --- |
| 00 | Equally divided |
| 01 | 25 |
| 10 | 50 |
| 11 | 75 |

Referring to Table 5, X represents the sharing proportion of the first group, and 1-X is the sharing proportion of the second group by default.

When the gap sharing information is 00, the measurement objects of the first group and the second group equally divide the measurement GAP resources; when the gap sharing information is 01, the measurement objects of the first group occupy 25% of the measurement GAP resources, and the measurement objects of the second group occupies 75% of the measurement GAP resources; etc.

It can be understood that the numerical values of the fourth proportion shown in Table 5 above are only exemplary, and the specific value of X is not limited in this embodiment, but can be selected according to actual needs.

Referring to the above Table 5, it can be determined that the current gap sharing information has 2 bits, and then the fourth proportion has 4 options, namely, "equally divided", "25%, 75%", "50%, 50%", and "75%, 25%".

For another example, N=3, which indicates that the gap sharing information has 3 bits, and there are 8 ways to implement the fourth proportion, as shown for example in the following Table 6.

Table 6

| Gap sharing information | Value of X (%) |
| --- | --- |
| 000 | Equally divided |
| 001 | 12.5 |
| 010 | 25 |
| 011 | 37.5 |
| 100 | 50 |
| 101 | 62.5 |
| 110 | 75 |
| 111 | 87.5 |

Referring to Table 6, X represents the sharing proportion of the first group, and by default 1-X is the sharing proportion of the second group.

When the gap sharing information is 000, the measurement objects of the first group and the second group divide the measurement GAP resources equally; when the gap sharing information is 001, the measurement objects of the first group occupy 12.5% of the measurement GAP resources, and the measurement objects of the second group occupy 87.5% of the measurement GAP resources; etc.

It can be understood that the numerical values of the fourth proportion shown in Table 6 above are only exemplary, and the specific value of X is not limited in this embodiment, but can be selected according to actual needs.

Referring to the above table 6, it can be determined that, the current gap sharing information has 3 bits, and then the fourth proportion has 48 options, namely "equally divided", " 12.5%, 87.5%", "25%, 75%", "37.5%, 62.5%", "50%, 50%", "62.5%, 37.5%", "75%, 25%", and "87.5%, 12.5%".

When the gap sharing information has 4 bits, the fourth proportion has 16 options, and so on. The implementation method is similar to that described above, and will not be repeated here. The various values of the first proportion can also be selected according to actual needs.

In this embodiment, by extending the proportion corresponding to the gap sharing information, more choices are provided for the network, so as to meet and support the diverse and flexible measurement requirements of network operators.

Based on the above embodiment, it should be noted that when there is no gap sharing information and no value is stored in the field, the terminal device determines which measurement gap sharing scheme in the table is to be applied.

On the basis of the foregoing embodiment, the communication method according to the embodiment of the present disclosure further includes: transmitting measurement capability information to the network device. The measurement capability information indicates whether the terminal device supports a first measurement capability, and the first measurement capability indicates that the terminal performs the mobility measurement on at least one measurement object based on the gap sharing information.

In this embodiment, the measurement capability information may be transmitted to the network device to determine whether the terminal device can perform the mobility measurement on at least one measurement object based on the gap sharing information. The capability reporting information may be, for example, 1-bit information, or another number of bits of information, which is not limited in this embodiment.

In a possible implementation, if the measurement capability information indicates that the terminal device does not support the first measurement capability, the terminal device may continue to use the existing sharing mechanism. In a possible implementation, the terminal device may preset a proportion for the measurement gap to perform the mobility measurement on the at least one measurement object.

The preset proportion may be, for example, 10%, which indicates that the mobility measurement is performed on the at least one measurement object based on 10% of the measurement GAP resources.

Alternatively, in another possible implementation, if the measurement capability information indicates that the terminal device supports the first measurement capability, the terminal device may perform the mobility measurement on the at least one measurement object based on the first measurement capability. In an implementation, the terminal device may reserve a proportion of the measurement GAP resources indicated by the network device for a predetermined group. For example, if the network device indicates that 10% of the measurement GAP resources is reserved for the predetermined group, it means that 10% of the measurement GAP resources is allocated to the predetermined group for mobility measurement; and the remaining 90% of the measurement GAP resources is for groups other than the predetermined group, that is, the original sharing proportions for the groups other than the predetermined group need to be multiplied by 90%.

In another possible situation, if the terminal device does not transmit the capability reporting information, the network device defaults the terminal device as a rel-15 terminal device, that is, the terminal device does not support the enhanced gap sharing solution according to the present disclosure.

In this embodiment, by transmitting the measurement capability information to the network device, the backward compatibility problem can be effectively solved for terminal devices supporting different releases. The network device can determine whether the terminal device supports the measurement capability for UTRA or GSM of inter-RAT based on the capability reporting indication of the terminal device or the terminal device identification, so as to determine whether the newly enhanced gap sharing mechanism can be configured for terminal devices with different capabilities or implementations.

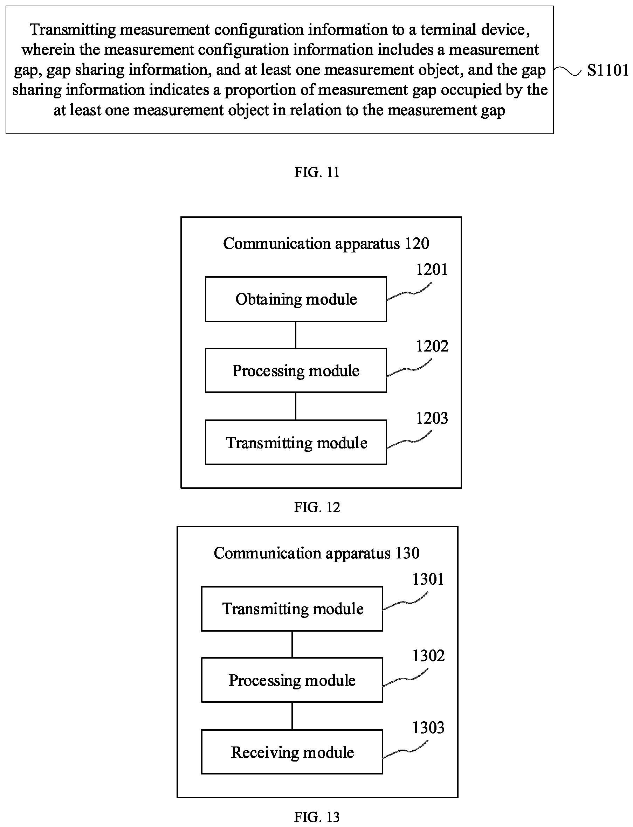

On the basis of the above embodiment, in the communication method according to the present disclosure, the network device can transmit the measurement configuration information to the terminal device. The communication method on the network device side is described below with reference to FIG. 11.

FIG. 11 is a flowchart of a communication method according to another embodiment of this disclosure.

As shown in FIG. 11, the method includes, at SI 101, transmitting measurement configuration information to a terminal device. The measurement configuration information includes a measurement gap, gap sharing information, and at least one measurement object. The gap sharing information indicates a proportion of measurement gap occupied by the at least one measurement object in relation to the measurement gap.

The measurement configuration information is the same as that described in the foregoing embodiment, and the implementation of the measurement configuration information will not be repeated here. The specific implementation may be learned by referring to the content in the foregoing embodiment.

The communication method according to the embodiment of the present disclosure includes transmitting the measurement configuration information to the terminal device. The measurement configuration information includes a measurement gap, gap sharing information, and at least one measurement object. The gap sharing information indicates the proportion of measurement gap occupied by the at least one measurement object in relation to the measurement gap. The measurement configuration information is transmitted by the network device, so that various sharing proportions for the measurement gap occupied by the at least one measurement object can be indicated by the gap sharing information. In this way, measurement priorities of various requirements can be configured based on different sharing proportions, to perform the mobility measurement on each measurement object, which can effectively meet the diverse needs of various networks or operators for measurement priorities.

FIG. 12 is a first schematic structural diagram of a communication apparatus according to an embodiment of the present disclosure. Referring to FIG. 12, the communication apparatus 120 may include an obtaining module 1201, a processing module 1202 and a transmitting module 1203.

The obtaining module 1201 is configured to obtain measurement configuration information transmitted by a network device. The measurement configuration information includes a measurement gap, gap sharing information and at least one measurement object, and the gap sharing information indicates a proportion of measurement gap occupied by the at least one measurement object in relation to the measurement gap.

The processing module 1202 is configured to perform a mobility measurement on the at least one measurement object in the measurement gap based on the gap sharing information.

In a possible implementation, the processing module 1102 is further configured to: determine a group corresponding to one of the at least one measurement object based on a measurement type to which said one of the at least one measurement object belongs. The measurement type includes any one of: a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

In a possible implementation, the gap sharing information includes N bits of information, where N is an integer greater than or equal to 2.

In a possible implementation, the processing module 1102 is specifically configured to: determine, based on the gap sharing information and a group corresponding to each of the at least one measurement object, the proportion of measurement gap occupied by the at least one measurement object in relation to the measurement gap; and perform the mobility measurement on the at least one measurement object in the measurement gap, based on the proportion of measurement gap occupied by the at least one measurement object in relation to the measurement gap.

In a possible implementation, the transmitting module 1203 is configured to transmit measurement capability information to a network device. The indication information indicates whether the terminal device supports a first measurement capability. The first measurement capability indicates that the terminal performs the mobility measurement on the at least one measurement object based on the gap sharing information.

In a possible implementation, when the measurement capability information indicates that the terminal device does not support the first measurement capability, the processing module 1102 is further configured to: perform the mobility measurement on the at least one measurement object, based on a measurement gap with a predetermined proportion.

In a possible implementation, when the measurement capability information indicates that the terminal device supports the first measurement capability, the processing module 1102 is further configured to: perform the mobility measurement on the at least one measurement object based on the first measurement capability.

In a possible implementation, the group is one of M groups, where M is an integer greater than or equal to 2.

In a possible implementation, the groups at least include a first group, a second group and a third group.

In a possible implementation, the first group includes an NR intra-frequency measurement, the second group at least includes one of: an NR inter-frequency measurement or an E-UTRA inter-frequency measurement, and the third group at least includes one of: a UTRA inter-RAT measurement, a GSM inter-RAT measurement, or an RSTD measurement.

In a possible implementation, the first group includes an NR intra-frequency measurement, the second group at least includes an NR inter-frequency measurement, and the third group at least includes one of: an E-UTRA inter-frequency measurement, a UTRA inter-RAT measurement, a GSM inter-RAT measurement, or an RSTD measurement.

In a possible implementation, the gap sharing information has N bits indicating a first proportion of measurement gap occupied by the at least one measurement object in relation to the measurement gap, where the first proportion has $2^N$ options.

In a possible implementation, the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap. The second proportion has $2^{N-1}$ options, and the predetermined group is one or more of the M groups.

In a possible implementation, the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap. The third proportion has $2^{N-1}$ options, and the predetermined group is one or more of the M groups.

In a possible implementation, the groups at least include a first group and a second group.

In a possible implementation, the first group includes an NR intra-frequency measurement, and the second group at least includes one of: an NR inter-frequency measurement, an E-UTRA inter-frequency measurement, a UTRA inter-RAT measurement, a GSM inter-RAT measurement, or an RSTD measurement.

In a possible implementation, the gap sharing information has N bits indicating a fourth proportion of measurement gap occupied by the at least one measurement object in relation to the measurement gap, where the fourth proportion has $2^N$ options.

The communication apparatus according to the embodiments of the present disclosure can implement the technical solutions shown in the foregoing method embodiments, and has similar implementation principles and beneficial effects, and details thereof are not repeated here.

FIG. 13 is a second schematic structural diagram of a communication apparatus according to an embodiment of the present disclosure. Referring to FIG. 13, the communication apparatus 130 may include a transmitting module 1301, a processing module 1302 and a receiving module 1303.

The transmitting module 1301 is configured to transmit measurement configuration information to a terminal device. The measurement configuration information includes a measurement gap, gap sharing information and at least one measurement object, and the gap sharing information indicates a proportion of measurement gap occupied by the at least one measurement object in relation to the measurement gap.

In a possible implementation, the processing module 1302 is configured to determine a group corresponding to one of the at least one measurement object based on a measurement type to which said one of the at least one measurement object belongs. The measurement type includes any one of: a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

In a possible implementation, the gap sharing information includes N bits of information, where N is an integer greater than or equal to 2.

In a possible implementation, the receiving module 1303 is configured to receive measurement capability information from the terminal device. The measurement capability information indicates whether the terminal device supports a first measurement capability, and the first measurement capability indicates that the terminal performs the mobility measurement on the at least one measurement object based on the gap sharing information.

In a possible implementation, when the measurement capability information indicates that the terminal device does not support the first measurement capability, the transmitting module 1301 is further configured to: indicate a predetermined proportion to the terminal device, for the terminal device to perform the mobility measurement on the at least one measurement object based on a measurement gap with the predetermined proportion.

In a possible implementation, the group is one of M groups, where M is an integer greater than or equal to 2.

In a possible implementation, the groups at least include a first group, a second group and a third group.

In a possible implementation, the first group includes an NR intra-frequency measurement, the second group at least includes one of: an NR inter-frequency measurement or an E-UTRA inter-frequency measurement, and the third group at least includes one of: a UTRA inter-RAT measurement, a GSM inter-RAT measurement, or an RSTD measurement.

In a possible implementation, the first group includes an NR intra-frequency measurement, the second group at least includes an NR inter-frequency measurement, and the third group at least includes one of: an E-UTRA inter-frequency measurement, a UTRA inter-RAT measurement, a GSM inter-RAT measurement, or an RSTD measurement.

In a possible implementation, the gap sharing information has N bits indicating a first proportion of measurement gap occupied by the at least one measurement object in relation to the measurement gap, where the first proportion has $2^N$ options.

In a possible implementation, the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap. The second proportion has $2^{N-1}$ options. The predetermined group is one or more of the M groups.

In a possible implementation, the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap. The third proportion has

$2^{N-1}$ options. The predetermined group is one or more of the M groups.

In a possible implementation, the groups at least include a first group and a second group.

In a possible implementation, the first group includes an NR intra-frequency measurement, and the second group at least includes one of: an NR inter-frequency measurement, an E-UTRA inter-frequency measurement, a UTRA inter-RAT measurement, a GSM inter-RAT measurement, or an RSTD measurement.

In a possible implementation, the gap sharing information has N bits indicating a fourth proportion of measurement gap occupied by the at least one measurement object in relation to the measurement gap. The fourth proportion has $2^N$ options.

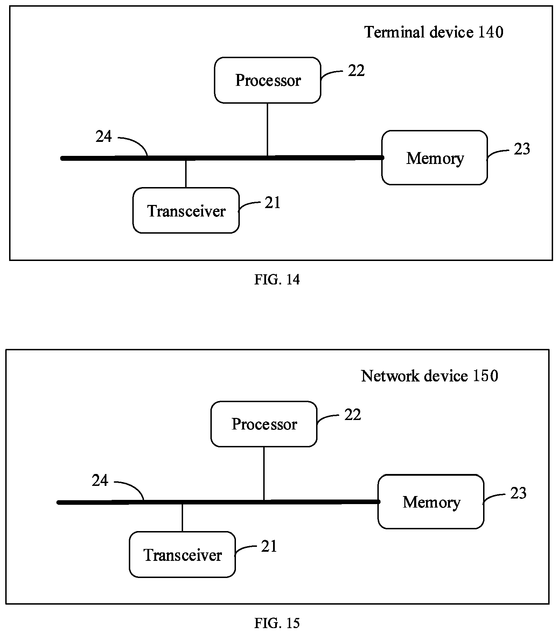

FIG. 14 is a schematic structural diagram of a terminal device according to an embodiment of the present disclosure. Referring to FIG. 14, the terminal device 140 may include a transceiver 21, a memory 22, and a processor 23. The transceiver 21 may include a transmitter and/or a receiver. The transmitter can also be referred to as a sender, a transmitting device, a transmitting port, a transmitting interface or the like, and the receiver can also be referred to as a receiving device, a receiving apparatus, a receiving port, a receiving interface or the like. For example, the transceiver 21, the memory 22, and the processor 23 are connected to each other through a bus 24.

The memory 22 stores program instructions.

The processor 23 is configured to execute the program instructions stored in the memory to cause the terminal device 140 to implement any of the communication methods described above.

The receiver of the transceiver 21 can be configured to perform the receiving function of the terminal device in the above-mentioned communication methods.

FIG. 15 is a schematic structural diagram of a network device according to an embodiment of the present disclosure. Referring to FIG. 15, the network device 150 may include a transceiver 21, a memory 22, and a processor 23. The transceiver 21 may include a transmitter and/or a receiver. The transmitter can also be referred to as a sender, a transmitting device, a transmitting port, a transmitting interface or the like, and the receiver can also be referred to as a receiving device, a receiving apparatus, a receiving port, a receiving interface or the like. For example, the transceiver 21, the memory 22, and the processor 23 are connected to each other through a bus 24.

The memory 22 stores program instructions.

The processor 23 is configured to execute the program instructions stored in the memory to cause the network device 150 to implement any of the communication methods described above.

The receiver of the transceiver 21 can be configured to perform the receiving function of the network device in the above-mentioned communication methods.

An embodiment of the present disclosure provides a computer-readable storage medium having computer-executable instructions stored thereon. The computer-executable instructions, when executed by a processor, implement the above-mentioned communication methods.

An embodiment of the present disclosure provides a computer-readable storage medium having computer-executable instructions stored thereon. The computer-executable instructions, when executed by a processor, implement the above-mentioned communication methods.

An embodiment of the present disclosure provides a computer program product, which can be executed by a processor. The computer program product, when executed by the processor, implements any one of the above-described communication methods performed by the terminal device.

The communication device, computer-readable storage medium, and computer program product according to embodiments of the present disclosure can be configured to perform the above-described communication methods performed by the terminal device. Specific implementations and beneficial effects can be found in the above descriptions, and repeated descriptions will be omitted here.

In the embodiments provided in the present disclosure, it should be understood that the disclosed systems, devices and methods may be implemented in other ways. For example, the apparatus embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit. The integrated unit may be implemented in a hardware form, or may be implemented in a form of software functional units.

A person of ordinary skill in the art can understand that all or part of the actions in the foregoing method embodiments can be implemented by related hardware instructed by programs. The aforementioned computer programs can be stored in a computer readable storage medium. When executed by a processor, the computer programs perform the actions in the foregoing method embodiments. The storage medium includes: ROM, RAM, magnetic disk, or optical disk or other medium that can store program codes.

Finally, it should be noted that the above embodiments are only used to illustrate the technical solutions of the present disclosure, and should not be construed as constituting any limitations to the present disclosure. Although the present disclosure has been described in detail with reference to the foregoing embodiments, those of ordinary skill in the art should understand that the technical solutions described in the foregoing embodiments can be modified, or some or all of the technical features can be equivalently replaced; and these modifications or replacements do not make the essence of corresponding technical solutions deviate from the scope of the technical solutions according to embodiments of the present disclosure.

**Claims**

1.  A communication method, applied in a terminal device, comprising:

    obtaining measurement configuration information transmitted by a network device, wherein the measurement configuration information comprises a measurement gap, gap sharing information, and at least one measurement object, and the gap sharing information indicates a proportion of measurement gap occupied by the at least one measurement object in relation to the measurement gap; and
    performing a mobility measurement on the at least one measurement object in the measurement gap based on the gap sharing information.

2.  The method according to claim 1, further comprising:
    determining a group corresponding to one of the at least one measurement object based on a measurement type to which said one of the at least one measurement object belongs, the measurement type comprising any one of a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

3.  The method according to claim 1 or 2, wherein the gap sharing information comprises N bits of information, where N is an integer greater than or equal to 2.

4.  The method according to any one of claims 1 to 3, wherein said performing the mobility measurement on the at least one measurement object in the measurement gap based on the gap sharing information comprises:

    determining, based on the gap sharing information and a group corresponding to each of the at least one measurement object, the proportion of measurement gap occupied by the at least one measurement object in relation to the measurement gap; and
    performing the mobility measurement on the at least one measurement object in the measurement gap, based on the proportion of measurement gap occupied by the at least one measurement object in relation to the measurement gap.

5.  The method according to any one of claims 1 to 4, further comprising:
    transmitting measurement capability information to the network device, the indication information indicating whether the terminal device supports a first measurement capability, and the first measurement capability indicating that the terminal performs the mobility measurement on the at least one measurement object based on the gap sharing information.

6.  The method according to claim 5, further comprising, when the measurement capability information indicates that the terminal device does not support the first measurement capability:
    performing the mobility measurement on the at least one measurement object, based on a measurement gap with a predetermined proportion.

7.  The method according to claim 5, further comprising, when the measurement capability information indicates that the terminal device supports the first measurement capability:

performing the mobility measurement on the at least one measurement object based on the first measurement capability.

8. The method according to any one of claims 1 to 7, wherein the group is one of M groups, where M is an integer greater than or equal to 2.

9. The method according to claim 8, wherein the groups at least comprise a first group, a second group and a third group.

10. The method according to claim 9, wherein the first group comprises an NR intra-frequency measurement, the second group at least comprises one of an NR inter-frequency measurement, or an E-UTRA inter-frequency measurement, and the third group at least comprises one of: a UTRA inter-RAT measurement, a GSM inter-RAT measurement, or an RSTD measurement.

11. The method according to claim 9, wherein the first group comprises an NR intra-frequency measurement, the second group at least comprises an NR inter-frequency measurement, and the third group at least comprises one of an E-UTRA inter-frequency measurement, a UTRA inter-RAT measurement, a GSM inter-RAT measurement, or an RSTD measurement.

12. The method according to any one of claims 8 to 11, wherein the gap sharing information has N bits indicating a first proportion of measurement gap occupied by the at least one measurement object in relation to the measurement gap, where the first proportion has $2^N$ options.

13. The method according to any one of claims 8 to 11, wherein the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap, where the second proportion has $2^{N-1}$ options, and the predetermined group is one or more of the M groups.

14. The method according to any one of claims 8 to 11, wherein the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap, where the third proportion has $2^{N-1}$ options, and the predetermined group is one or more of the M groups.

15. The method according to claim 8, wherein the groups at least comprise a first group and a second group.

16. The method according to claim 15, wherein the first group comprises an NR intra-frequency measurement, and the second group at least comprises one of: an NR inter-frequency measurement, an E-UTRA inter-frequency measurement, a UTRA inter-RAT measurement, a GSM inter-RAT measurement, or an RSTD measurement.

17. The method according to claim 15 or 16, wherein the gap sharing information has N bits indicating a fourth proportion of measurement gap occupied by the at least one measurement object in relation to the measurement gap, where the fourth proportion has $2^N$ options.

18. A communication method, applied in a network device, comprising:
transmitting measurement configuration information to a terminal device, wherein the measurement configuration information comprises a measurement gap, gap sharing information, and at least one measurement object, and the gap sharing information indicates a proportion of measurement gap occupied by the at least one measurement object in relation to the measurement gap.

19. The method according to claim 18, further comprising:
determining a group corresponding to one of the at least one measurement object based on a measurement type to which said one of the at least one measurement object belongs, the measurement type comprising any one of a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

20. The method according to claim 18 or 19, wherein the gap sharing information comprises N bits of information, where N is an integer greater than or equal to 2.

21. The method according to any one of claims 18 to 20, further comprises:
receiving measurement capability information from the terminal device, the measurement capability information indicating whether the terminal device supports a first measurement capability, and the first measurement capability indicating that the terminal performs the mobility measurement on the at least one measurement object based on the gap sharing information.

22. The method according to claim 21, further comprising, when the measurement capability information indicates that the terminal device does not support the first measurement capability:
indicating a predetermined proportion to the terminal device, for the terminal device to perform the mobility measurement on the at least one measurement object based on a measurement gap with the predetermined proportion.

23. The method according to any one of claims 18 to 22, wherein the group is one of M groups, where M is an integer greater than or equal to 2.

24. The method according to claim 23, wherein the groups at least comprise a first group, a second group and a third group.

25. The method according to claim 24, wherein the first group comprises an NR intra-frequency measurement, the second group at least comprises one of an NR inter-frequency measurement, or an E-UTRA inter-frequency measurement, and the third group at least comprises one of: a UTRA inter-RAT measurement, a GSM inter-RAT measurement, or an RSTD measurement.

26. The method according to claim 24, wherein the first group comprises an NR intra-frequency measurement, the second group at least comprises an NR inter-frequency measurement, and the third group at least comprises one of an E-UTRA inter-frequency measurement, a UTRA inter-RAT measurement, a GSM inter-RAT measurement, or an RSTD measurement.

27. The method according to any one of claims 23 to 26, wherein the gap sharing information has N bits indicating a first proportion of measurement gap occupied by the at least one measurement object in relation to the measurement gap, where the first proportion has $2^N$ options.

28. The method according to any one of claims 23 to 26, wherein the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap, where the second proportion has $2^{N-1}$ options, and the predetermined group is one or more of the M groups.

29. The method according to any one of claims 23 to 26, wherein the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap, where the third proportion has $2^{N-1}$ options, and the predetermined group is one or more of the M groups.

30. The method according to claim 23, wherein the groups at least comprise a first group and a second group.

31. The method according to claim 30, wherein the first group comprises an NR intra-frequency measurement, and the second group at least comprises one of: an NR inter-frequency measurement, an E-UTRA inter-frequency measurement, a UTRA inter-RAT measurement, a GSM inter-RAT measurement, or an RSTD measurement.

32. The method according to claim 30 or 31, wherein the gap sharing information has N bits indicating a fourth proportion of measurement gap occupied by the at least one measurement object in relation to the measurement gap, where the fourth proportion has $2^N$ options.

33. A communication apparatus, applied in a terminal device, comprising:

> an obtaining module configured to obtain measurement configuration information transmitted by a network device, wherein the measurement configuration information comprises a measurement gap, gap sharing information, and at least one measurement object, and the gap sharing information indicates a proportion of measurement gap occupied by the at least one measurement object in relation to the measurement gap; and
> a processing module configured to perform a mobility measurement on the at least one measurement object in the measurement gap based on the gap sharing information.

34. The apparatus according to claim 33, wherein the processing module is further configured to:
determine a group corresponding to one of the at least one measurement object based on a measurement type to which said one of the at least one measurement object belongs, the measurement type comprising any one of a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

35. The apparatus according to claim 33 or 34, wherein the gap sharing information comprises N bits of information, where N is an integer greater than or equal to 2.

36. The apparatus according to any one of claims 33 to 35, wherein the processing module is specifically configured to:

> determine, based on the gap sharing information and a group corresponding to each of the at least one measurement object, the proportion of measurement gap occupied by the at least one measurement object in relation to the measurement gap; and
> perform the mobility measurement on the at least one measurement object in the measurement gap, based on the proportion of measurement gap occupied by the at least one measurement object in relation to the measurement gap.

37. The apparatus according to any one of claims 33 to 36, further comprising:
a transmitting module configured to transmit measurement capability information to the network device, the indication information indicating whether the terminal device supports a first measurement capability, and the first measurement capability indicating that the terminal performs the mobility measurement on the at least one measurement object based on the gap sharing information.

38. The apparatus according to claim 37, wherein the processing module is further configured to, when the measurement capability information indicates that the terminal device does not support the first measurement capability:
perform the mobility measurement on the at least one measurement object, based on a measurement gap with a predetermined proportion.

39. The apparatus according to claim 37, wherein the processing module is further configured to, when the measurement capability information indicates that the terminal device supports the first measurement capability:
perform the mobility measurement on the at least one measurement object based on the first measurement capability.

40. The apparatus according to any one of claims 33 to 39, wherein the group is one of M groups, where M is an integer greater than or equal to 2.

41. The apparatus according to claim 40, wherein the groups at least comprise a first group, a second group and a third group.

42. The apparatus according to claim 41, wherein the first group comprises an NR intra-frequency measurement, the second group at least comprises one of an NR inter-frequency measurement, or an E-UTRA inter-frequency measurement, and the third group at least comprises one of: a UTRA inter-RAT measurement, a GSM inter-RAT measurement, or an RSTD measurement.

43. The apparatus according to claim 41, wherein the first group comprises an NR intra-frequency measurement, the second group at least comprises an NR inter-frequency measurement, and the third group at least comprises one of an E-UTRA inter-frequency measurement, a UTRA inter-RAT measurement, a GSM inter-RAT measurement, or an RSTD measurement.

44. The apparatus according to any one of claims 40 to 43, wherein the gap sharing information has N bits indicating a first proportion of measurement gap occupied by the at least one measurement object in relation to the measurement gap, where the first proportion has $2^N$ options.

45. The apparatus according to any one of claims 40 to 43, wherein the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap, where the second proportion has $2^{N-1}$ options, and the predetermined group is one or more of the M groups.

46. The apparatus according to any one of claims 40 to 43, wherein the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap, where the third proportion has $2^{N-1}$ options, and the predetermined group is one or more of the M groups.

47. The apparatus according to claim 40, wherein the groups at least comprise a first group and a second group.

48. The apparatus according to claim 47, wherein the first group comprises an NR intra-frequency measurement, and the second group at least comprises one of: an NR inter-frequency measurement, an E-UTRA inter-frequency measurement, a UTRA inter-RAT measurement, a GSM inter-RAT measurement, or an RSTD measurement.

49. The apparatus according to claim 47 or 48, wherein the gap sharing information has N bits indicating a fourth proportion of measurement gap occupied by the at least one measurement object in relation to the measurement gap, where the fourth proportion has $2^N$ options.

50. A communication apparatus, applied in a network device, comprising:
a transmitting module configured to transmit measurement configuration information to a terminal device, wherein the measurement configuration information comprises a measurement gap, gap sharing information, and at least one measurement object, and the gap sharing information indicates a proportion of measurement gap occupied by the at least one measurement object in relation to the measurement gap.

51. The apparatus according to claim 50, further comprises:
a processing module configured to determine a group corresponding to one of the at least one measurement object based on a measurement type to which said one of the at least one measurement object belongs, the measurement type comprising any one of a New Radio (NR) intra-frequency measurement, an NR inter-frequency measurement, an Evolved Universal Terrestrial Radio Access (E-UTRA) inter-frequency measurement, a Universal Terrestrial Radio Access (UTRA) inter-Radio Access Technology (RAT) measurement, a Global System For Mobile Communication (GSM) inter-RAT measurement, or a Reference Signal Time Difference (RSTD) measurement.

52. The apparatus according to claim 50 or 51, wherein the gap sharing information comprises N bits of information, where N is an integer greater than or equal to 2.

53. The apparatus according to any one of claims 50 to 52, further comprising:
a receiving module configured to receive measurement capability information from the terminal device, the measurement capability information indicating whether the terminal device supports a first measurement capability, and the first measurement capability indicating that the terminal performs the mobility measurement on the at least one measurement object based on the gap sharing information.

54. The apparatus according to claim 53, wherein the processing module is further configured to, when the measurement capability information indicates that the terminal device does not support the first measurement capability:
indicate a predetermined proportion to the terminal device, for the terminal device to perform the mobility measurement on the at least one measurement object based on a measurement gap with the predetermined proportion.

55. The apparatus according to any one of claims 50 to 54, wherein the group is one of M groups, where M is an integer greater than or equal to 2.

56. The apparatus according to claim 55, wherein the groups at least comprise a first group, a second group and a third group.

57. The apparatus according to claim 56, wherein the first group comprises an NR intra-frequency measurement, the second group at least comprises one of an NR inter-frequency measurement, or an E-UTRA inter-frequency measurement, and the third group at least comprises one of: a UTRA inter-RAT measurement, a GSM inter-RAT measurement, or an RSTD measurement.

58. The apparatus according to claim 56, wherein the first group comprises an NR intra-frequency measurement, the second group at least comprises an NR inter-frequency measurement, and the third group at least comprises one of an E-UTRA inter-frequency measurement, a UTRA inter-RAT measurement, a GSM inter-RAT measurement, or an RSTD measurement.

59. The apparatus according to any one of claims 55 to 58, wherein the gap sharing information has N bits indicating a first proportion of measurement gap occupied by the at least one measurement object in relation to the measurement gap, where the first proportion has $2^N$ options.

60. The apparatus according to any one of claims 55 to 58, wherein the gap sharing information has a first bit indicating activating no sharing of the measurement gap for a measurement object in a predetermined group, and remaining bits of the gap sharing information other than the first bit indicate a second proportion of measurement gap occupied by measurement objects in each remaining one of the M groups other than the predetermined group in relation to the measurement gap, where the second proportion has $2^{N-1}$ options, and the predetermined group is one or more of the M groups.

61. The apparatus according to any one of claims 55 to 58, wherein the gap sharing information has a first bit indicating activating sharing of the measurement gap for a measurement object in a predetermined group, and remaining bits of the gap sharing information other than the first bit indicate a third proportion of measurement gap occupied by measurement objects in each remaining one of the M groups other than the predetermined group in relation to the measurement gap, where the third proportion has $2^{N-1}$ options, and the predetermined group is one or more of the M groups.

62. The apparatus according to claim 55, wherein the groups at least comprise a first group and a second group.

63. The apparatus according to claim 62, wherein the first group comprises an NR intra-frequency measurement, and the second group at least comprises one of an NR inter-frequency measurement, an E-UTRA inter-frequency measurement, a UTRA inter-RAT measurement, a GSM inter-RAT measurement, or an RSTD measurement.

64. The apparatus according to claim 62 or 63, wherein the gap sharing information has N bits indicating a fourth proportion of measurement gap occupied by the at least one measurement object in relation to the measurement gap, where the fourth proportion has $2^N$ options.

65. A terminal device, comprising:

a transceiver;
a memory having computer-executable instructions stored thereon; and
a processor, when executing the computer-executable instructions, implementing the communication apparatus according to any one of claims 1 to 17.

66. A network device, comprising:

a transceiver;
a memory having computer-executable instructions stored thereon; and
a processor, when executing the computer-executable instructions, implementing the communication apparatus according to any one of claims 18 to 32.

67. A computer-readable storage medium, having computer-executable instructions stored thereon, wherein the computer-executable instructions, when executed by a processor, implement the communication apparatus according to any one of claims 1 to 17.

68. A computer-readable storage medium, having computer-executable instructions stored thereon, wherein the computer-executable instructions, when executed by a processor, implement the communication apparatus according to any one of claims 18 to 32.

EP 4 138 437 A1

Network device

Terminal device

FIG. 1

Neighboring cell 132
（intra-frequency）

Neighboring cell 131
（intra-frequency）

Serving cell 130
（intra-frequency）

Measurement
configuration

Measurement
report

Neighboring cell 133
（inter-frequency）

RS

Neighboring cell 134
（inter-RAT）

FIG. 2

Serving   Terminal   Target
cell   device   cell

Frequency
point

FIG. 3

Serving   Terminal   Target
cell   device   cell

Frequency
point

FIG. 4

| GAP pattern id | Measurement gap length | Measurement gap repetition period |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |

FIG. 5

Measurement gap

| System frame | Gap | Subframe | | | | | | | | | |
|---|---|---|---|---|---|---|---|---|---|---|---|
| | | 0 | 1 | 2 | 3 | 4 | 5 | 6 | 7 | 8 | 9 |
| 0 | Gap | ▨ | ▨ | ▨ | ▨ | ▨ | ▨ | | | | |
| 1 | | | | | | | | | | | |
| 2 | | | | | | | | | | | |
| 3 | | | | | | | | | | | |
| 4 | Gap | ▨ | ▨ | ▨ | ▨ | ▨ | ▨ | | | | |
| 5 | | | | | | | | | | | |
| 6 | | | | | | | | | | | |
| 7 | | | | | | | | | | | |
| 8 | Gap | ▨ | ▨ | ▨ | ▨ | ▨ | ▨ | | | | |
| 9 | | | | | | | | | | | |

FIG. 6

SMTC window    MG

MO SMTC1

5ms

20ms

Time domain

MO SMTC2

5ms

10ms

Time domain

gap

6ms

20ms

Time domain

FIG. 7

Obtaining measurement configuration information transmitted by a network device, wherein the measurement configuration information includes a measurement gap, gap sharing information, and at least one measurement object, and the gap sharing information indicates a proportion of measurement gap occupied by the at least one measurement object in relation to the measurement gap    S801

Performing a mobility measurement on the at least one measurement object in the measurement gap based on the gap sharing information    S802

FIG. 8

| First group | Second group | Third group |
|---|---|---|
| NR intra-frequency measurement | NR inter-frequency measurement, and/or E-UTRA inter-frequency measurement | UTRA inter-RAT measurement, and/or GSM inter-RAT measurement, and/or RSTD measurement |

FIG. 9

| First group | Second group |
|---|---|
| NR intra-frequency measurement | NR inter-frequency measurement, and/or E-UTRA inter-frequency measurement, and/or UTRA inter-RAT measurement, and/or GSM inter-RAT measurement, and/or RSTD measurement |

FIG. 10

Transmitting measurement configuration information to a terminal device, wherein the measurement configuration information includes a measurement gap, gap sharing information, and at least one measurement object, and the gap sharing information indicates a proportion of measurement gap occupied by the at least one measurement object in relation to the measurement gap

S1101

FIG. 11

Communication apparatus 120

Obtaining module 1201

Processing module 1202

Transmitting module 1203

FIG. 12

Communication apparatus 130

Transmitting module 1301

Processing module 1302

Receiving module 1303

FIG. 13

Terminal device 140

Processor — 22

24 —

Memory — 23

Transceiver — 21

FIG. 14

Network device 150

Processor — 22

24 —

Memory — 23

Transceiver — 21

FIG. 15

<div align="center">

**INTERNATIONAL SEARCH REPORT**

</div>

| | International application No. |
|---|---|
| | **PCT/CN2020/085481** |

| A. | CLASSIFICATION OF SUBJECT MATTER |
|---|---|
| | H04W 24/02(2009.01)i; H04L 5/00(2006.01)i |

According to International Patent Classification (IPC) or to both national classification and IPC

| B. | FIELDS SEARCHED |
|---|---|

Minimum documentation searched (classification system followed by classification symbols)

    H04W; H04Q; H04L; H04B

Documentation searched other than minimum documentation to the extent that such documents are included in the fields searched

Electronic data base consulted during the international search (name of data base and, where practicable, search terms used)

    CNTXT, CNABS, VEN, WOTXT, USTXT, EPTXT, PATENTICS, 3GPP: 测量配置, 测量间隔, 测量对象, 间隔共享, 优先级, 比例, measurement?, configuration?, gap?, object?, sharing, MO?, priority, mobility, ratio, percent, factor

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110557976 A (MEDIATEK INC.) 10 December 2019 (2019-12-10) abstract, and claims 1-15 | 1-68 |
| A | CN 110944351 A (VIVO COMMUNICATION TECHNOLOGY CO., LTD.) 31 March 2020 (2020-03-31) entire document | 1-68 |
| A | CN 106921991 A (LEADCORE TECHNOLOGY CO., LTD. et al.) 04 July 2017 (2017-07-04) entire document | 1-68 |
| A | ERICSSON. "Further aspects of measurement gap design for NR: Multiple layers," *3GPP TSG-RAN WG4 Meeting #87, R4-1806234*, 25 May 2018 (2018-05-25), entire document | 1-68 |
| A | ERICSSON. "Gap sharing for intra-frequency measurements with gaps and inter-frequency/interRAT measurement," *3GPP TSG-RAN WG4 Meeting #86, R4-1802081*, 02 March 2018 (2018-03-02), entire document | 1-68 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2020** | **01 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/085481**

| Patent document cited in search report | | | Publication date (day/month/year) | Patent family member(s) | | | Publication date (day/month/year) |
|---|---|---|---|---|---|---|---|
| CN | 110557976 | A | 10 December 2019 | WO | 2019185044 | A1 | 03 October 2019 |
| | | | | US | 2019306734 | A1 | 03 October 2019 |
| | | | | TW | 201943291 | A | 01 November 2019 |
| CN | 110944351 | A | 31 March 2020 | WO | 2020057418 | A1 | 26 March 2020 |
| CN | 106921991 | A | 04 July 2017 | | None | | |

Form PCT/ISA/210 (patent family annex) (January 2015)